# EUROPÄISCHE PATENTSCHRIFT

(11) **EP 2 956 235 B1**
(45) Veröffentlichungstag und Bekanntmachung des Hinweises auf die Patenterteilung: **03.05.2017**
(21) Anmeldenummer: 14704156.0
(22) Anmeldetag: 13.02.2014
(51) Int. Cl.: B01J 19/00, B32B 18/00, F01N 3/28, F16J 15/10

(54) **MATERIAL UND VERFAHREN ZUM ABDICHTEN VON HOHLRÄUMEN**
MATERIAL AND METHOD FOR SEALING CAVITIES
MATÉRIAU ET PROCÉDÉ POUR L'ÉTANCHEMENT DE CAVITÉS

(30) Priorität: 14.02.2013 EP 13155160
(43) Veröffentlichungstag der Anmeldung: 23.12.2015
(73) Patentinhaber: BASF SE, 67056 Ludwigshafen am Rhein (DE)
(72) Erfinder: OLBERT, Gerhard, 69221 Dossenheim (DE); GAUER, Jochen, 67063 Ludwigshafen (DE); KUHN, Robert, 67454 Haßloch (DE); WÖLFERT, Andreas, 749006 Bad Rappenau (DE); FRIEDRICH, Holger, 67549 Worms (DE)
(74) Vertreter: BASF IP Association
(86) Internationale Anmeldenummer: PCT/EP2014/052820
(87) Internationale Veröffentlichungsnummer: WO 2014/125023

(56) Entgegenhaltungen:
- EP-A2- 0 192 417
- WO-A1-2010/105000
- US-A1- 2011 023 430

## Beschreibung

Die Erfindung betrifft ein Material sowie ein Verfahren zum Abdichten von Hohlräumen.

Es ist häufig erforderlich, Hohlräume zwischen Bauteilen zu überbrücken, eine zuverlässige mechanische Halterung zwischen denselben zu erreichen sowie diese gegeneinander abzudichten. Dies kann besonders problematisch sein, wenn die Bauteile aus Werkstoffen mit voneinander verschiedenen Eigenschaften ausgebildet sind, insbesondere mit unterschiedlichem Temperaturverhalten. Beispielsweise ist das Temperaturverhalten von keramischen Werkstoffen gegenüber metallischen Werkstoffen extrem unterschiedlich. Das Temperaturverhalten, d. h. das Verhalten eines Stoffes bezüglich Veränderungen seiner Abmessungen bei Temperaturveränderungen wird Üblicherweise durch den thermischen Ausdehnungskoeffizienten oder Wärmeausdehnungskoeffizienten beschrieben.

Das Problem der Abdichtung von Bauteilen aus keramischen Werkstoffen gegenüber Bauteilen aus metallischen Werkstoffen tritt beispielsweise in Hochtemperaturreaktoren auf. In derartigen Reaktoren sind häufig Katalysatorschüttungen in metallischen Körben gelagert, die gegen ein tragendes Bauteil, insbesondere die Reaktorwand, abgedichtet werden müssen. In Hochtemperaturreaktoren werden häufig auch keramische Einbauten, wie Monolithe eingesetzt. Die Reaktorquerschnitte können rund oder polygonal sein. Die in Körben gelagerten Katalysatorschüttungen bzw. die Monolithe müssen zur Reaktorwand hin abgedichtet werden.

Hierfür haben sich sogenannte Blähmatten, das heißt flächige Einlagen, bewährt, die bei Temperaturerhöhungen expandieren (aufquellen). Blähmatten sind in der Regel aus Silikaten, z. B. Aluminiumsilikat, einem Blähglimmer, z. B. Vermiculit, und einem organischen Bindemittel zusammengesetzt.

Blähmatten werden z. B. von der Firma 3M unter der Markenbezeichnung INTERAM® vertrieben.

Die Volumenvergrößerung der bekannten Blähmatten durch die Temperaturerhöhung im konkreten Anwendungsbereich führt jedoch häufig nur zu einer nicht ausreichenden Abdichtung. Insbesondere kann allein dadurch keine für eine ausreichende Haltekraft erforderliche Verspannung erreicht werden.

Aus US 2011/023430 A1 ist ein Material zum Abdichten von Hohlräumen zwischen zwei Bauteilen bekannt, enthaltend eine Blähmatte, wobei die Blähmatte allseitig in eine Kunststofffolie eingeschweißt ist, und wobei der durch die Kunststofffolie begrenzte und die Blähmatte enthaltende Innenraum vakuumiert ist.

Es war die Aufgabe der Erfindung, ein Material zur Verfügung zu stellen, das geeignet ist, Hohlräume zwischen Bauteilen, auch aus Werkstoffen mit extrem unterschiedlichem Temperaturverhalten, zuverlässig abzudichten und eine zuverlässige mechanische Halterung zu gewährleisten, das die obigen Nachteile nicht aufweist, und das einen einfachen Einbau oder Zusammenbau von Bauteilen ohne Vorspannung, mit zuverlässiger Halterung, ermöglicht.

Die Aufgabe wird gelöst durch ein Material zum Abdichten von Hohlräumen zwischen zwei Bauteilen mit den Merkmalen des beigefügten Patentanspruchs 1. Das erfindungsgemäße Material enthält eine Blähmatte, wobei die Blähmatte allseitig in eine Kunststofffolie eingeschweißt ist, und wobei der durch die Kunststofffolie begrenzte und die Blähmatte enthaltende Innenraum vakuumiert ist.

Insbesondere sind die zwei Bauteile aus Werkstoffen mit unterschiedlichem Temperaturverhalten oder aus demselben Werkstoff gebildet, jedoch voneinander verschiedene Temperaturen aufweisen.

Durch die Vakuumierung des die Blähmatte enthaltenden Innenraumes wird dieselbe gegenüber ihrer ursprünglichen Dicke in der Regel um über 50 % zusammengedrückt, wobei die ursprüngliche Länge und Breite der Blähmatte unverändert bleiben. In der vakuumierten Blähmatte verbleibt nach Eindrücken mit dem Finger praktisch keine Vertiefung.

Blähmatten sind flächenförmige Gebilde mit einer Dicke im Bereich von ca. 3 bis 20 mm, bevorzugt in einem Bereich von ca. 5 bis 10 mm.

Breite und Länge der Blähmatten sind fertigungstechnisch bedingt, und liegen jeweils in einem Bereich von ca. 0,5 bis 5 m. Ein typisches Maß für Blähmatten beträgt 1,20 m x 4 m.

Blähmatten sind in der Regel aus Silikaten, vorzugsweise in Faserform, z. B. Aluminiumsilikat, einem Blähglimmer, d. h. einem Material, das bei Temperaturerhöhung expandiert, z. B. dem nicht-toxischen Vermiculit, und einem organischen Bindemittel zusammengesetzt. Blähmatten werden beispielsweise von der Firma 3M unter der Markenbezeichnung INTERAM® vertrieben.

Die organischen Bindemittel haben jedoch eine Reihe von nachteiligen Eigenschaften, insbesondere führen sie zur Geruchsbelästigung durch Ausdampfen flüchtiger Anteile, sowie zur Vergiftung von Katalysatoren. Zunehmend werden daher Blähmatten mit einem niedrigeren Gehalt an organischen Bindemitteln, von früher ca. 12 bis 14 Gew.-%, auf nunmehr ca. 2 bis 5 Gew.-%, insbesondere 3 bis 4 Gew.-% organisches Bindemittel, bezogen auf das Gesamtgewicht der Blähmatte, gefordert. Durch den niedrigeren Gehalt an organischem Bindemittel werden die Blähmatten jedoch krümeliger, weniger gut plastisch verformbar und schlechter handhabbar.

Das organische Bindemittel kann in einem Anteil von 2 bis 15 Gew.-%, bezogen auf das Gesamtgewicht der Blähmatte, enthalten sein, jedoch bevorzugt in einem Anteil von 2 bis 8 Gew.-%, besonders bevorzugt von 3 bis 4 Gew.-%, jeweils bezogen auf das Gesamtgewicht der Blähmatte.

In einer bevorzugten Ausführungsform liegt das organische Bindemittel in Form von organischen Polymerfasern vor, insbesondere in Form von organischen Polymerfasern mit zwei oder mehreren Schmelzbereichen.

Blähmatten enthaltend Silikatfasern, einen Blähglimmer und organische Polymerfasern sind besonders vorteilhaft, das sie federnde Eigenschaften aufweisen, und damit eine ausgezeichnete Abdichtung durch Verspannung zwischen den Bauteilen, zwischen denen Hohlräume zu überbrücken sind, gewährleisten:
Bei Temperaturerhöhung, sobald der erste oder einzige Schmelzbereich erreicht ist, beginnen die organischen Polymerfasern zu schmelzen, und vernetzen (verkleben) die in Faserform vorliegenden Silikate. Die Silikatfasern bilden dadurch ein Fasergerüst mit Hohlräumen aus, in denen der Blähglimmer eingelagert ist. Bei erhöhter Temperatur bringt der Blähglimmer auf das Fasergerüst eine Spannung auf, und dehnt dieses auf. Wenn die Temperatur wieder fällt, verringert der Blähglimmer sein Volumen, das Fasergerüst hält jedoch die Spannung weitergehend weiter.

Besonders vorteilhaft sind organische Polymerfasern mit zwei oder mehreren Schmelzbereichen: eine erste Fraktion von organische Polymerfasern, mit einem niedrigeren Schmelzbereich, z. B. etwa um 500°C, bildet zunächst eine Grobstruktur durch Vernetzen eines Teils der Silikatfasern aus; bei weiterer Temperaturerhöhung, auf z.B. etwa 700 bis 800 °C schmilzt eine weitere Fraktion von organischen Polymerfasern, und vernetzt weitere Silikatfasern, so dass weiter Spannung aufgebracht wird. Dadurch kann die jeweils erforderliche Verspannung zwischen den zu verbindenden Bauteilen gewährleistet werden.

Bevorzugt ist der Anteil der organischen Polymerfasern in der Blähmatte von 2 bis 8 Gew.-%, besonders bevorzugt von 3 bis 4 Gew.-%, jeweils bezogen auf das Gesamtgewicht der Blähmatte.

Indem die Blähmatten erfindungsgemäß allseitig mit einer Kunststofffolie umhüllt werden, werden diese Nachteile jedoch behoben und auch Matten mit den geforderten niedrigeren Bindemittelhalten können in einfacher Weise gehandhabt und in die Hohlräume, unter Ausfüllung derselben, eingebracht werden.

Erfindungsgemäß werden die Blähmatten allseitig in eine Folie aus einem Kunststoff eingehüllt, der insbesondere aus einem oder mehreren Polyamiden, bevorzugt aus einer Mischung aus Polyamiden mit Polyethylen und/oder Polypropylen, gebildet ist.

Zum Umhüllen der Matte wird bevorzugt eine Kunststofffolie eingesetzt, deren eine Seite eine strukturierte, nicht vollkommen glatte Oberfläche aufweist; die Matte wird mit der Kunststofffolie dergestalt umhüllt, dass deren strukturierte Seite zur Matte hin gerichtet ist. Dadurch wird das Vakuumziehen erleichtert, da sich zwischen den einander gegenüberliegenden strukturierten Innenseiten der Kunststofffolie durch die feinen Oberflächenstrukturen, die sich gegenseitig abstützen, Hohlräume bilden, durch die die Luft abgesaugt werden kann. Vollkommen plane Flächen würden dagegen aneinander kleben und das Vakuumieren des Innenraumes erschweren.

Nachdem die Blähmatte in die Kunststofffolie eingehüllt ist, wird der von der Kunststofffolie umschlossene und die Blähmatte enthaltende Innenraum vakuumiert.

Insbesondere wird der die Blähmatte enthaltende und von der Kunststofffolie umschlossene Innenraum auf ein Vakuum von kleiner oder gleich 60 mbar gebracht.

Durch das Entvakuumieren dehnt sich die Blähmatte bis auf das Doppelte ihrer Dicke im vakuumiertem Zustand aus. Dadurch ist es möglich, die für den Zusammenbau vorgesehenen Bauteile lose, mit Spiel, ohne Aufbringung von Kräften, zusammenzusetzen, wobei dennoch gewährleistet ist, dass die sich beim Entvakuumieren ausdehnende Blähmatte die Bauteile sicher fixiert.

Der die Blähmatte enthaltende Innenraum kann in einfacher Weise entvakuumiert werden, indem die Kunststofffolie angestochen oder angeschnitten wird.

Zusätzlich oder alternativ kann der von der Kunststofffolie umschlossene und die Blähmatte enthaltende Innenraum entvakuumiert werden, indem die Blähmatte einer erhöhten Temperatur ausgesetzt wird, bei der die Kunststofffolie verbrennt.

Die einzelnen, vakuumierten Blähmatten werden mit rechteckigem Stufenfalz bzw. in rechteckigem Nut-Feder-System aneinandergereiht, so dass die Dichtigkeit der Verbindung gewährleistet ist.

Es ist auch möglich zwei oder mehrere Blähmatten übereinander zu legen und dieses Paket anschließend in eine Kunststofffolie zu hüllen und zu vakuumieren. Dadurch kann ein einfacherer Einbau zum Ausfüllen größerer Hohlräume erreicht werden.

Die Blähmatten können an der Stirnseite derselben verstärkt sein, so dass der Abrieb derselben verringert oder verhindert wird.

Erfindungsgemäß wird ein mehrlagiges Verbundmaterial zur Verfügung gestellt, umfassend zwei oder mehrere Blähmatten, mit Zwischenlagen zwischen jeweils zwei unmittelbar aufeinanderfolgenden Blähmatten zwecks mechanischer Stabilisierung. Als Zwischenlagen werden insbesondere Lochbleche oder Siebe eingesetzt.

Die Zwischenlagen weisen insbesondere eine Dicke zwischen 0,3 und 1 mm auf.

Die Zwischenlagen weisen insbesondere ein Öffnungsverhältnis von ca. 25 bis 50 % auf.

Als Werkstoff für die Zwischenlagen wird bevorzugt Edelstahl oder Aluminium eingesetzt.

Die Zwischenlagen sind bevorzugt aus verformbarem Material, insbesondere aus Metall gebildet, so dass sich durch Verformung derselben unterschiedliche gewünschte Formen stabil erzeugen lassen.

Das mehrlagige Verbundmaterial, umfassend zwei oder mehrere Blähmatten mit Zwischenlagen zwischen jeweils zwei aufeinanderfolgenden Blähmatten, wird in analoger Weise wie die einzelne Blähmatte mit einer Kunststofffolie allseitig umhüllt und vakuumiert.

Das mehrlagige Verbundmaterial eignet sich insbesondere für Anwendungszwecke, für die die mechanische Stabilität des Materials eine größere Rolle spielt, beispielsweise zum Abdichten von parallelepipedischen Bauteilen in zylindrischen Reaktoren.

Besonders vorteilhaft ist auch der Einsatz in Bereichen, in denen der Brandschutz eine wichtige Rolle spielt, beispielsweise für Kaminabdichtungen oder Abdichtungen von Zu- und Abströmleitungen für Brennkammern, insbesondere von großen Verbrennungsmotoren oder in Vorrichtungen zur Abgasreinigung.

Durch Einsatz des erfindungsgemäßen Abdichtungsmaterials ist eine einfache Verbindung von Rohren mit einem anderen Bauteil, beispielweise mit Wänden oder Decken in Gebäuden, oder auch von Bauteilen von Brennkammern, insbesondere von Verbrennungsmotoren möglich: Die zu verbindenden Bauteile werden lediglich zusammengesteckt und die Hohlräume dazwischen mit erfindungsgemäßem Abdichtungsmaterial ausfüllt. Bei Temperaturerhöhung, beispielsweise infolge eines Brandes, schmilzt die Kunststofffolie, das darin eingeschlossene Material dehnt sich aus und gewährleistet dabei eine zuverlässige Abdichtung. Dadurch wird ein aktiver Brandschutz gewährleistet. Eine Verschweißung der Bauteile ist nicht erforderlich.

Gegenstand der Erfindung ist auch die Verwendung des vorstehend beschriebenen Materials in einem zylindrischen Reaktor zur Herstellung von Salpetersäure durch katalytische Ammoniakverbrennung an einem Platin-Netz, das auf einer Katalysatorschüttung zur Abreicherung des Reaktionsgasgemisches an Lachgas aufliegt, wobei die Katalysatorschüttung in einem Katalysatorkorb eingebracht ist, der konzentrisch, unter Freilassung eines Ringspaltes, im Reaktorinnenraum angeordnet ist, und wobei das Material zur Abdichtung des Ringspaltes zwischen dem Katalysatorkorb und der äußeren Begrenzung des Ringspaltes angeordnet ist.

Die äußere Begrenzung des Ringspaltes kann eine metallische Schürze sein.

In einer anderen Ausführungsform ist die äußere Begrenzung des Ringspaltes die Reaktorinnenwand.

Da der Ringspalt zwischen dem Katalysatorkorb und der äußeren Begrenzung desselben, insbesondere in der metallischen Schürze oder in der Reaktorinnenwand, häufig unterschiedlich breit ist, in der Regel zwischen 15 und 50 mm, legt man zum Ausfüllen desselben bevorzugt mehrere Blähmatten übereinander, mit oder ohne Versatz.

Weiter bevorzugt können Blähmatten mit unterschiedlicher Dicke eingesetzt werden, insbesondere können zunächst nicht vakuumierte und anschließend vakuumierte Blähmatten in den Ringspalt eingeschoben werden.

Durch den Einbau von Blähmatten konnten für einen Reaktor zur großtechnischen Herstellung von Salpetersäure mit einer Kapazität von 100000 Jahrestonnen die Emissionen an klimaschädlichem Lachgas um 30 % reduziert werden.

Gegenstand der Erfindung ist auch die Verwendung des vorstehend beschriebenen Materials zur thermischen Isolierung der Außenwand eines Rohres, in dem ein Brenner angeordnet ist, wobei das Material vorzugsweise auf die Außenwand eines Hilfsrohres mit kleinerem Durchmesser als das zu isolierende Rohr aufgebracht wird, das in das zu isolierende Rohr eingeschoben wird.

Gegenstand der Erfindung ist auch die Verwendung des vorstehend beschriebenen Materials in einem Hordenkontaktofen zur Oxidation von Schwefeldioxid zu Schwefeltrioxid an einem Vanadiumpentoxid enthaltenden Katalysator, der in zwei, drei, vier oder mehreren übereinander angeordneten Horden eingebracht ist, mit einer Zwischenkühlung zwischen jeweils zwei aufeinander folgenden Horden, wobei das Material zur Abdichtung des Zwischenraumes zwischen der äußeren Begrenzung der Horden und der Innenwand des Hordenkontaktofens eingesetzt wird.

Die Oxidation von Schwefeldioxid zu Schwefeltrioxid ist ein wesentlicher Zwischenschritt in der Herstellung von Schwefelsäure; hierfür wird heutzutage ausschließlich das Kontaktverfahren verwendet, wobei Vanadiumpentoxid als Sauerstoff übertragender Katalysator eingesetzt wird. Durch die erfindungsgemäße Abdichtung der Katalysator beinhaltenden Horden gegenüber der Reaktorinnenwand wird ein Bypass des Schwefeldioxids verhindert, so dass eine erhöhte Ausbeute gewährleistet wird.

### Bezugszeichenliste

- 1: Blähmatte
- 2: Fasermatte
- 3: Zwischenlagen
- 4: Verstärkungsmaterial an der Stirnseite
- 5: Reaktorinnenwand
- 6: Katalysatorkorb
- 7: Tragerost
- 8: Katalysatorschüttung
- 9: Monolithe
- 10: Auflagesieb
- 11: Zwischenlage
- 12: Decke
- 13: Rohr

Die Erfindung wird im Folgenden anhand einer Zeichnung näher erläutert.

Es zeigen im Einzelnen:
- Figur 1A: eine schematische Darstellung einer bevorzugten Ausführungsform für eine Blähmatte, vor der Vakuumierung,
- Figur 1B: dieselbe Blähmatte nach der Vakuumierung,
- Figur 2: eine schematische Darstellung für das bevorzugte Zusammenfügen von Blähmatten mit Stufenfalz,
- Figur 3: eine schematische Darstellung des erfindungsgemäßen Materials, gebildet aus einer Blähmatte, mit Querschnittsdarstellung in Figur 3A,
- Figur 4: eine bevorzugte Ausführungsform des erfindungsgemäßen Materials, umfassend eine Blähmatte und eine Fasermatte aus oxidischen Fasern, mit Querschnittsdarstellung in Figur 4A,
- Figur 5: eine weiter bevorzugte Ausführungsform des erfindungsgemäßen Materials, umfassend eine Blähmatte, mit Verstärkungsmaterial an der Stirnseite, mit Querschnittsdarstellung in Figur 5A,
- Figur 6 und Figur 7: weitere bevorzugte Ausführungsformen einer erfindungsgemäßen Blähmatte, mit Zwischenlage zur mechanischen Stabilisierung,
- Figur 8: eine weitere bevorzugte Ausführungsform des erfindungsgemäßen Materials, mit bevorzugt drei übereinander angeordneten Blähmatten, vor der Vakuumierung, sowie nach der Vakuumierung in Figur 8A,
- Figur 9: eine schematische Darstellung für den bevorzugten Einsatz des erfindungsgemäßen Materials zur Abdichtung einer Katalysatorschüttung gegen die Reaktorinnenwand, in Querschnittsdarstellung durch den Reaktor, und Darstellung im Längsschnitt in Figur 9A,
- Figur 10: eine schematische Darstellung für einen weiteren bevorzugten Einsatz des erfindungsgemäßen Materials zur Abdichtung von Monolithen gegen die Reaktorinnenwand, in Querschnittsdarstellung den Reaktor, und Darstellung im Längsschnitt in Figur 10A,
- Figur 11: eine schematische Darstellung des bevorzugten Einsatzes des erfindungsgemäßen Materials für einen Deckendurchbruch oder eine Kaminabdichtung und
- Figur 12: eine schematische Darstellung eines weiter bevorzugten Einsatzes des erfindungsgemäßen Materials zur Abdichtung von Rohrverbindungen, beispielsweise für Anschlüsse in Brennkammern.

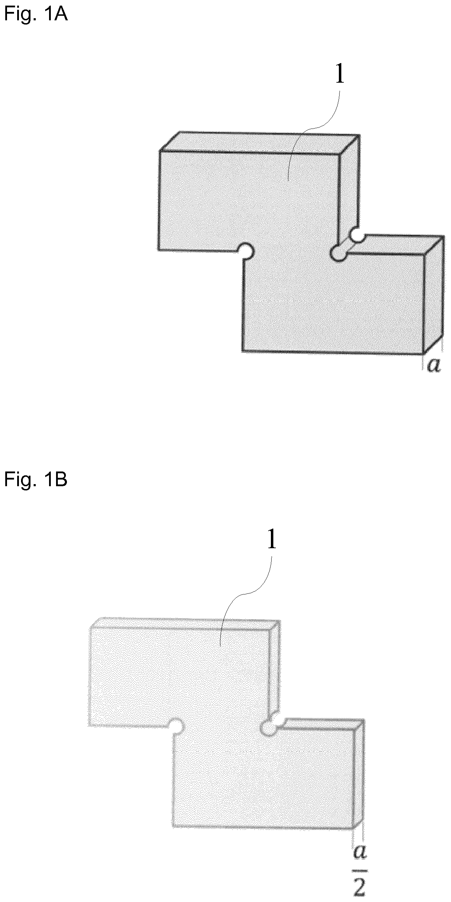

Figur 1A zeigt schematisch eine bevorzugte Ausführungsform für eine Blähmatte 1, in Form einer rechtwinkligen Z-Stufe, mit der Dicke a, vor der Umhüllung derselben mit einer Kunststofffolie.

In Figur 1B ist dieselbe Blähmatte 1 dargestellt, jedoch nach der Umhüllung mit einer nicht dargestellten Kunststofffolie und Vakuumierung des Innenraumes, wodurch die Dicke der Blähmatte auf einen Wert von a/2 reduziert wird.

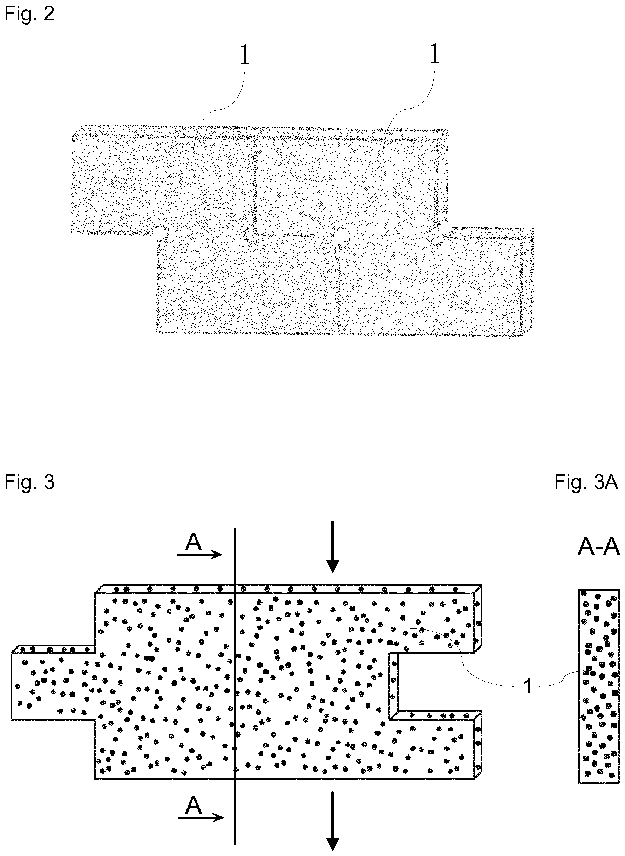

Figur 2 zeigt eine bevorzugte Ausführungsform zum Zusammenbau von zwei Blähmatten 1, die rechtwinklig abgestuft sind, mit rechtwinkligem Stufenfalz, der die Dichtigkeit des Zusammenbaus gewährleistet.

Die schematische Darstellung in Figur 3 zeigt beispielhaft das erfindungsgemäße Material, bestehend einer Blähmatte 1 in Form einer flächigen Einlage, mit Querschnittsdarstellung in der Ebene A-A in Figur 1A.

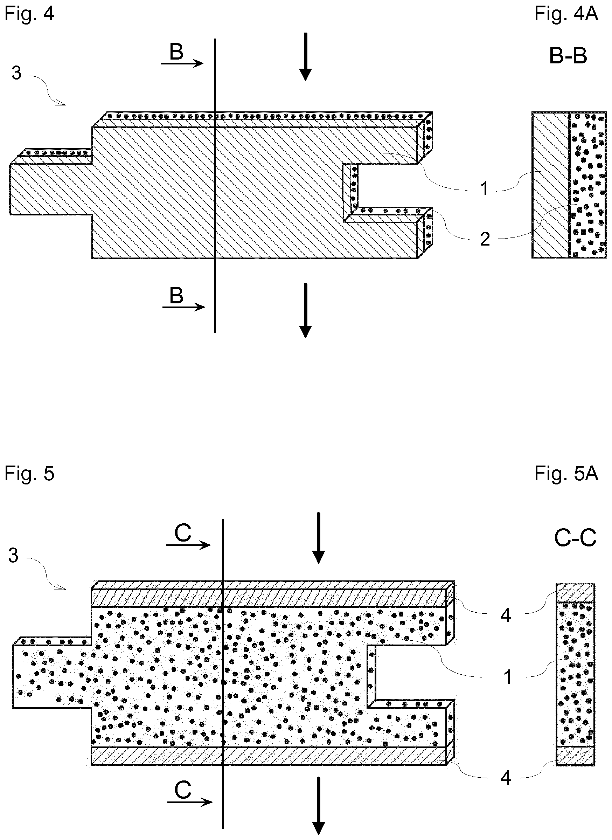

Figur 4 zeigt eine weiter bevorzugte Ausführungsform für das erfindungsgemäße Material, gebildet aus einer Blähmatte 1 und einer Fasermatte 2 aus oxidischen Fasern, die an ihren Großflächen miteinander verbunden sind, mit Querschnittsdarstellung in der Ebene B-B in Figur 2A.

Figur 5 zeigt schematisch eine bevorzugte Ausführungsform für das erfindungsgemäße Material, gebildet aus einer Blähmatte 1, mit Verstärkungsmaterial 4, an den Stirnseiten derselben, mit Querschnittsdarstellung in Figur 5A.

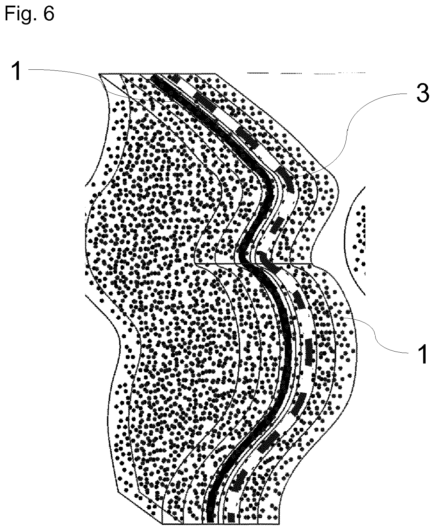

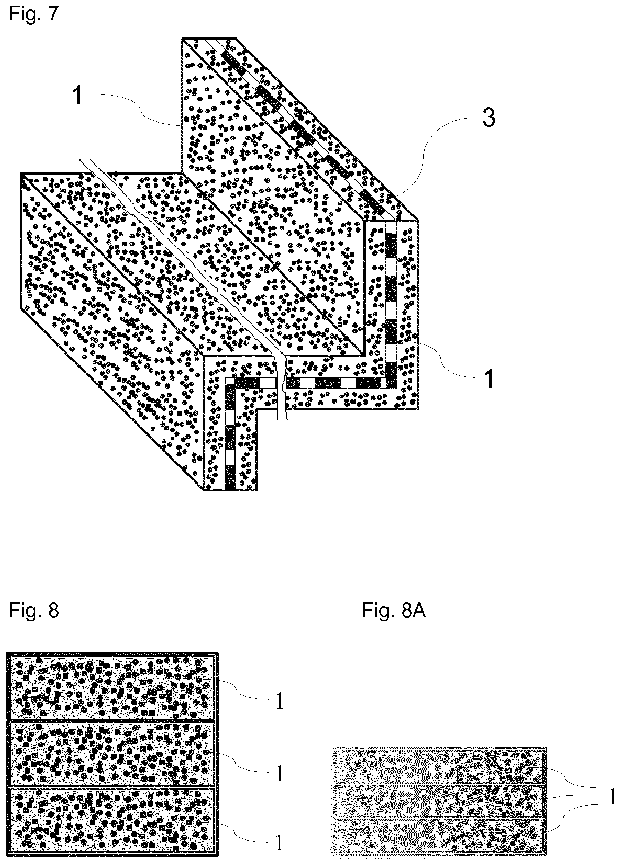

Die Figuren 6 und 7 zeigen weitere bevorzugte Ausführungsformen für das erfindungsgemäße Material, als Verbundmaterial, umfassend eine Zwischenlage 3 zwischen zwei aufeinanderfolgenden Blähmatten 1, zwecks mechanischer Stabilisierung des mehrlagigen Verbundmaterials.

Figur 8 zeigt eine bevorzugte Ausführungsform, wonach beispielhaft drei Blähmatten 1 übereinander angeordnet sind, vor dem Umhüllen derselben mit einer Kunststofffolie und Vakuumieren des Innenraumes bzw. nach Umhüllen mit einer nicht dargestellten Kunststofffolie und Vakuumieren des Innenraumes in Figur 8A.

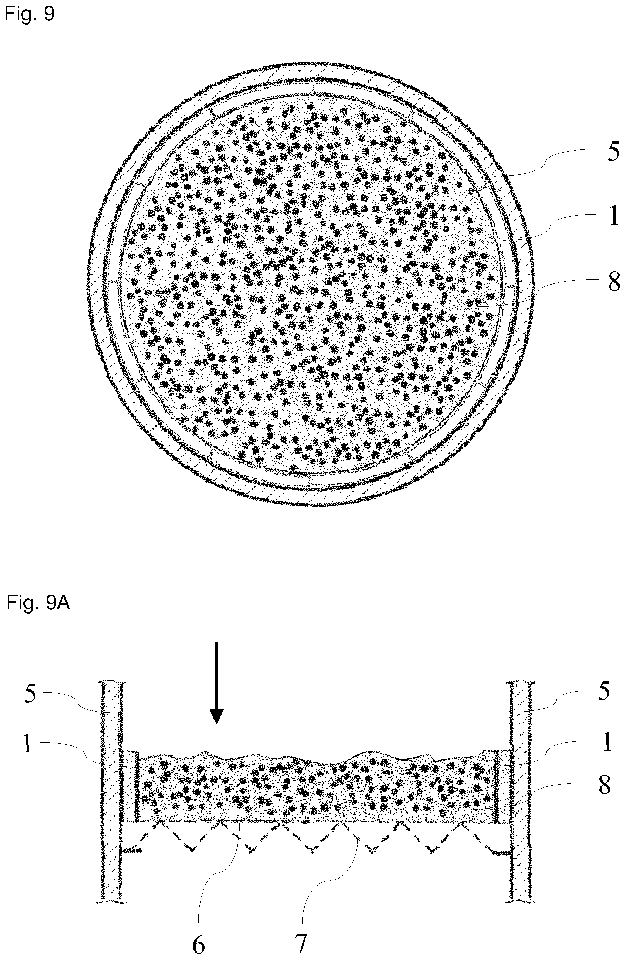

Figur 9 zeigt eine schematische Darstellung einer bevorzugten Verwendung des erfindungsgemäßen Materials 1 zum Abdichten einer Katalysatorschüttung 8, gegen die Innenwand 5 eines Reaktors, in Querschnittsdarstellung durch den Reaktor, mit Darstellung im Längsschnitt in Figur 9A, wobei in Figur 9A zusätzlich der die Katalysatorschüttung beinhaltende Katalysatorkorb 6 sowie der Tragerost 7 für denselben erkennbar ist.

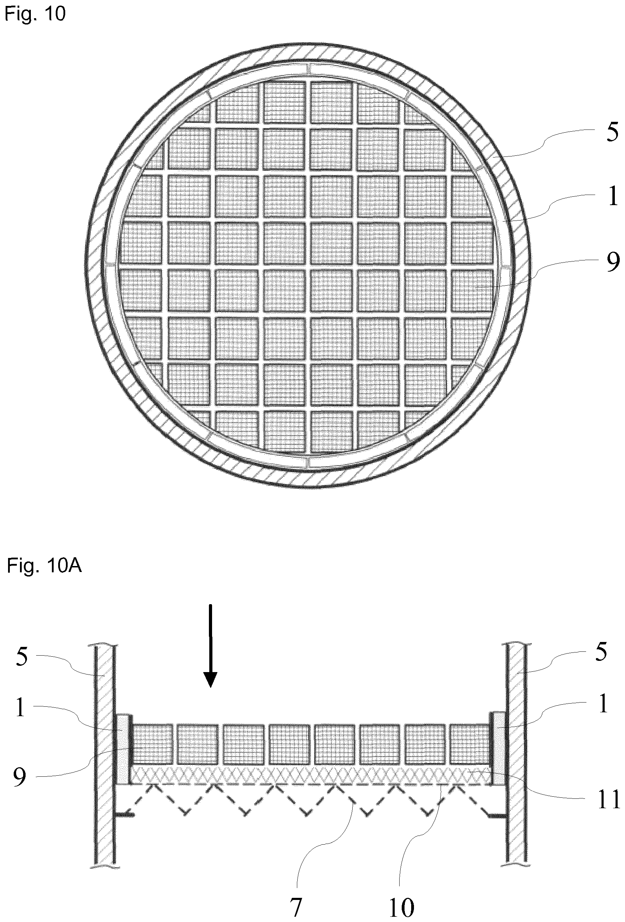

Figur 10 zeigt eine schematische Darstellung für einen weiteren bevorzugten Einsatz des erfindungsgemäßen Materials 1, zur Abdichtung von Monolithen 9, gegen die Innenwand 5 eines Reaktors, in Querschnittsdarstellung durch den Reaktor, mit Darstellung im Längsschnitt in Figur 10A, wobei in Figur 10A zusätzlich der Tragerost 7, das Auflagesieb 10 sowie eine Zwischenlage 11 erkennbar sind, wobei die Zwischenlage 11 aus einem Material mit Öffnungen gebildet ist, die dergestalt dimensioniert sind, dass die von oben nach unten durch den Reaktor gerichtete Gasströmung, die in Figur 10A durch einen Pfeil angedeutet ist, durch die Kanäle der

Monolithe austreten kann, und dieselben nicht durch das Auflagesieb 10 verschlossen werden.

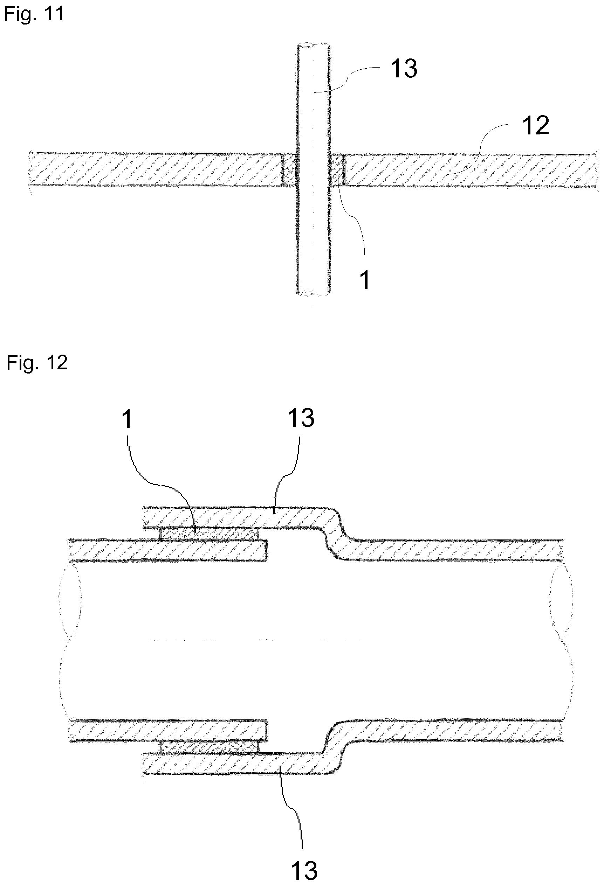

Figur 11 zeigt eine schematische Darstellung für einen bevorzugten Einsatz des erfindungsgemäßen Materials enthaltend eine Blähmatte 1, zur Abdichtung eines Durchbruchs durch eine schematisch angedeutete Decke 12 durch ein metallisches Rohr 13.

Figur 12 zeigt schematisch einen weiteren bevorzugten Einsatz für Rohrverbindungen, zwischen Rohren 13, die erhöhten Temperaturen ausgesetzt werden.

## Patentansprüche

1. Material zum Abdichten von Hohlräumen zwischen zwei Bauteilen, enthaltend eine Blähmatte (1), die allseitig in eine Kunststofffolie eingeschweißt ist, wobei der durch die Kunststofffolie begrenzte und die Blähmatten (1) enthaltende Innenraum vakuumiert ist, **dadurch gekennzeichnet, dass** das Material als mehrlagiges Verbundmaterial ausgebildet ist, umfassend zwei oder mehrere Blähmatten (1), mit Zwischenlagen (3) zwischen jeweils zwei unmittelbar aufeinanderfolgenden Blähmatten (1), die eine mechanische Stabilisierung des mehrlagigen Verbundmaterials bewirken, und wobei die einzelnen, vakuumierten Blähmatten (1) mit rechteckigem Stufenfalz bzw. in rechteckigem Nut-Feder-System aneinandergereiht sind, sodass die Dichtigkeit der Verbindung gewährleistet ist.

2. Material nach Anspruch 1, **dadurch gekennzeichnet, dass** die zwei Bauteile aus Werkstoffen mit unterschiedlichem Temperaturverhalten oder aus demselben Werkstoff gebildet sind, jedoch voneinander verschiedene Temperaturen aufweisen.

3. Material nach Anspruch 1 oder 2, **dadurch gekennzeichnet, dass** die Blähmatte (1) einen Blähglimmer, ein Silikat und ein organisches Bindemittel enthält.

4. Material nach Anspruch 3, **dadurch gekennzeichnet, dass** die Blähmatte das organische Bindemittel in einem Anteil von 2 bis 15 Gew.-%, bevorzugt von 2 bis 8 Gew.-%, weiter bevorzugt von 3 bis 4 Gew.-%, jeweils bezogen auf das Gesamtgewicht der Blähmatte (1), enthält.

5. Material nach Anspruch 3 oder 4, **dadurch gekennzeichnet, dass** das Silikat ein Aluminiumsilikat ist.

6. Material nach einem der Ansprüche 3 bis 5, **dadurch gekennzeichnet, dass** der Blähglimmer Vermiculit ist.

7. Material nach einem der Ansprüche 1 bis 6, **dadurch gekennzeichnet, dass** das Material eine Verbundmatte ist, umfassend zusätzlich zu einer Blähmatte (1) eine Fasermatte (2) aus oxidischen Fasern, wobei die Blähmatte (1) und die Fasermatte (2) aus oxidischen Fasern jeweils Flächengebilde sind, die an ihren Großflächen miteinander verbunden sind.

8. Material nach Anspruch 7, **dadurch gekennzeichnet, dass** die Verbundmatte mehrere aufeinanderfolgende Lagen von jeweils einer Blähmatte (1) und jeweils einer Fasermatte (2) aus oxidischen Fasern, umfasst.

9. Material nach einem der Ansprüche 1 bis 8, **dadurch gekennzeichnet, dass** die Zwischenlagen (3) aus Lochblechen oder Sieben gebildet sind.

10. Material nach einem der Ansprüche 1 bis 9, **dadurch gekennzeichnet, dass** als Kunststoffe für die Kunststofffolie ein oder mehrere Polyamide oder Mischungen aus einem oder mehreren Polyamiden mit Polyethylen und/oder Polypropylen eingesetzt werden.

11. Material nach einem der Ansprüche 1 bis 10, **dadurch gekennzeichnet, dass** die Kunststofffolie auf einer Seite derselben strukturiert ist.

12. Verfahren zur Abdichtung von Hohlräumen zwischen zwei Bauteilen, unter Verwendung eines Materials nach einem der Ansprüche 1 bis 11, **dadurch gekennzeichnet, dass** das Material nach dem Einbau in den Hohlraum zwischen den Bauteilen entvakuumiert wird.

13. Verfahren nach Anspruch 12, **dadurch gekennzeichnet, dass** das Material entvakuumiert wird, indem die Kunststofffolie angestochen oder angeschnitten wird oder indem die Temperatur auf einen Wert erhöht wird, bei dem die Kunststofffolie verbrennt.

14. Verwendung des Materials nach einem der Ansprüche 1 bis 11 in einem zylindrischen Reaktor zur Herstellung von Salpetersäure durch katalytische Ammoniakverbrennung an einem Platin-Netz, das auf einer Katalysatorschüttung zur Abreicherung des Reaktionsgasgemisches an Lachgas aufliegt, wobei die Katalysatorschüttung in einem Katalysatorkorb eingebracht ist, der konzentrisch, unter Freilassung eines Ringspaltes im Reaktorinnenraum angeordnet ist, und wobei das Material zur Abdichtung des Ringspaltes zwischen dem Katalysatorkorb und der äußeren Begrenzung des Ringspaltes angeordnet ist.

15. Verwendung nach Anspruch 14, **dadurch gekennzeichnet, dass** die äußere Begrenzung des Ringspaltes eine metallische Schürze ist.

16. Verwendung nach Anspruch 15, **dadurch gekennzeichnet, dass** die äußere Begrenzung des Ringspaltes die Reaktorinnenwand ist.

17. Verwendung des Materials nach einem der Ansprüche 1 bis 11 zur thermischen Isolierung der Außenwand eines Rohres, in dem ein Brenner angeordnet ist, wobei das Material vorzugsweise auf die Außenwand eines Hilfsrohres mit kleinerem Durchmesser als das zu isolierende Rohr aufgebracht wird, das in das zu isolierende Rohr eingeschoben wird.

18. Verwendung des Materials nach einem der Ansprüche 1 bis 11 in einem Hordenkontaktofen zur Oxidation von Schwefeldioxid zu Schwefeltrioxid an einem Vanadiumpentoxid enthaltenden Katalysator, der in zwei, drei, vier oder mehreren übereinander angeordneten Horden eingebracht ist, mit einer Zwischenkühlung zwischen jeweils zwei aufeinander folgenden Horden, wobei das Material zur Abdichtung des Zwischenraumes zwischen der äußeren Begrenzung der Horden und der Innenwand des Hordenkontaktofens eingesetzt wird.

## Claims

1. A material for sealing off cavities between two structural components, comprising an intumescent mat (1) completely sealed in a polymeric film, where the interior bounded by the polymeric film and containing the intumescent mats (1) is evacuated, wherein the material is formed as a multi-ply composite material comprising two or more intumescent mats (1) with interplies (3) between any two directly successive intumescent mats (1) to mechanically stabilize said multi-ply composite material and wherein the individual evacuated intumescent mats (1) are rowed together using a rectangular rabbet or a rectangular tongue and groove system to ensure tightness.

2. The material according to claim 1 wherein the two structural components are formed of materials having different thermal characteristics or of the same material but have different temperatures.

3. The material according to claim 1 or 2 wherein said intumescent mat (1) comprises an expandable mica, a silicate and an organic binder.

4. The material according to claim 3 wherein the intumescent mat comprises the organic binder in an amount of from 2 to 15 wt%, preferably from 2 to 8 wt% and more preferably from 3 to 4 wt%, in each case based on the overall weight of intumescent mat (1).

5. The material according to claim 3 or 4 wherein the silicate is an aluminum silicate.

6. The material according to any of claims 3 to 5 wherein the expandable mica is vermiculite.

7. The material according to any of claims 1 to 6 being a composite mat, said composite mat in addition to an intumescent mat (1) comprising a fibrous mat (2) of oxidic fibers, wherein said intumescent mat (1) and said fibrous mat (2) of oxidic fibers are each sheet bodies joined together at their major surfaces.

8. The material according to claim 7 wherein the composite mat comprises a plurality of successive plies of one intumescent mat (1) and one fibrous mat (2) of oxidic fibers.

9. The material according to any of claims 1 to 8 wherein said interplies (3) are formed of sieves or perforated sheets.

10. The material according to any of claims 1 to 9 wherein plastics used for the polymeric film comprise one or more polyamides or mixtures of one or more polyamides with polyethylene and/or polypropylene.

11. The material according to any of claims 1 to 10 wherein the polymeric film is textured on one side thereof.

12. A method of sealing off cavities between two structural components by using a material according to any of claims 1 to 11, which method comprises devacuating the material after insulation in the cavity between the structural components.

13. The method according to claim 12 wherein the material is devacuated by puncturing or incising the polymeric film or by elevating the temperature to a value at which the polymeric film burns away.

14. A method of using the material according to any of claims 1 to 11 in a cylindrical reactor for production of nitric acid by catalytic oxidation of ammonia over a platinum gauze resting on a catalyst bed for ridding the reaction gas mixture of nitrous oxide, wherein the catalyst bed is accommodated in a catalyst cage disposed within the reactor interior in a concentric arrangement leaving an annular gap and wherein the material is arranged between the catalyst cage and the outer bound of the annular gap to seal off the annular gap.

15. The method according to claim 14 wherein the outer bound of the annular gap is a metallic apron.

16. The method according to claim 15 wherein the outer bound of the annular gap is the reactor inside wall.

17. A method of using the material according to any of claims 1 to 11 to thermally insulate the outer wall of a pipe within which a burner is arranged, wherein the material is preferably applied to the outer wall of an auxiliary tube which has a smaller diameter than the tube to be insulated and which is pushed into the tube to be insulated.

18. A method of using the material according to any of claims 1 to 11 in a tray contact furnace for oxidation of sulfur dioxide into sulfur trioxide over a catalyst comprising vanadium pentoxide and accommodated in two, three, four or more trays in a superposed arrangement, with intercooling between any two successive trays, wherein the material is employed to seal off the interspace between the outer bound of the trays and the inside wall of the tray contact furnace.

## Revendications

1. Matériau pour l'étanchéification de cavités entre deux composants, contenant un mat gonflé (1), qui est emballé de tous les côtés dans un film en plastique, l'espace intérieur délimité par le film en plastique et contenant les mats gonflés (1) étant mis sous vide, **caractérisé en ce que** le matériau est configuré sous la forme d'un matériau composite multicouche, comprenant deux mats gonflés (1) ou plus, avec à chaque fois des couches intermédiaires (3) entre deux mats gonflés (1) directement successifs, qui assurent une stabilisation mécanique du matériau composite multicouche, les mats gonflés (1) individuels mis sous vide étant juxtaposés avec une battue rectangulaire ou dans un système à rainure et languette rectangulaire, de manière à assurer l'étanchéité de la liaison.

2. Matériau selon la revendication 1, **caractérisé en ce que** les deux composants sont formés en des matériaux ayant des comportements en température différents ou en le même matériau, mais présentent toutefois des températures différentes l'un de l'autre.

3. Matériau selon la revendication 1 ou 2, **caractérisé en ce que** le mat gonflé (1) contient un mica gonflé, un silicate et un liant organique.

4. Matériau selon la revendication 3, **caractérisé en ce que** le mat gonflé contient le liant organique en une proportion de 2 à 15 % en poids, de préférence de 2 à 8 % en poids, de manière davantage préférée de 3 à 4 % en poids, à chaque fois par rapport au poids total du mat gonflé (1).

5. Matériau selon la revendication 3 ou 4, **caractérisé en ce que** le silicate est un silicate d'aluminium.

6. Matériau selon l'une quelconque des revendications 3 à 5, **caractérisé en ce que** le mica gonflé est la vermiculite.

7. Matériau selon l'une quelconque des revendications 1 à 6, **caractérisé en ce que** le matériau est un mat composite, comprenant en plus d'un mat gonflé (1) un mat fibreux (2) constitué de fibres oxydiques, le mat gonflé (1) et le mat fibreux (2) constitué de fibres oxydiques étant chacun des structures plates qui sont reliées l'une avec l'autre au niveau de leurs grandes surfaces.

8. Matériau selon la revendication 7, **caractérisé en ce que** le mat composite comprend plusieurs couches successives respectivement d'un mat gonflé (1) et d'un mat fibreux (2) constitué de fibres oxydiques.

9. Matériau selon l'une quelconque des revendications 1 à 8, **caractérisé en ce que** les couches intermédiaires (3) sont formées par des tôles perforées ou des tamis.

10. Matériau selon l'une quelconque des revendications 1 à 9, **caractérisé en ce qu'**un ou plusieurs polyamides ou des mélanges d'un ou de plusieurs polyamides avec du polyéthylène et/ou du polypropylène sont utilisés en tant que plastiques pour le film en plastique.

11. Matériau selon l'une quelconque des revendications 1 à 10, **caractérisé en ce que** le film en plastique est structuré sur un de ses côtés.

12. Procédé d'étanchéification de cavités entre deux composants, utilisant un matériau selon l'une quelconque des revendications 1 à 11, **caractérisé en ce que** le matériau est extrait du vide après la mise en place dans la cavité entre les composants.

13. Procédé selon la revendication 12, **caractérisé en ce que** le matériau est extrait du vide en perçant ou découpant le film en plastique ou en augmentant la température à une valeur à laquelle le film en plastique brûle.

14. Utilisation du matériau selon l'une quelconque des revendications 1 à 11 dans un réacteur cylindrique pour la fabrication d'acide nitrique par combustion catalytique d'ammoniac sur un filet en platine qui est disposé sur un garnissage catalytique pour l'appauvrissement du mélange réactionnel gazeux en gaz hilarant, le garnissage catalytique étant introduit dans un panier de catalyseur qui est agencé de manière concentrique en laissant un espace annulaire dans l'espace intérieur du réacteur, et le matériau pour l'étanchéification de l'espace annulaire étant agencé entre le panier de catalyseur et la limite extérieure de l'espace annulaire.

15. Utilisation selon la revendication 14, **caractérisée en ce que** la limite extérieure de l'espace annulaire est une jupe métallique.

16. Utilisation selon la revendication 15, **caractérisée en ce que** la limite extérieure de l'espace annulaire est la paroi intérieure du réacteur.

17. Utilisation du matériau selon l'une quelconque des revendications 1 à 11 pour l'isolement thermique de la paroi extérieure d'un tube dans lequel un brûleur est agencé, le matériau étant de préférence appliqué sur la paroi extérieure d'un tube auxiliaire de diamètre plus petit que le tube à isolé, qui est inséré dans le tube à isoler.

18. Utilisation du matériau selon l'une quelconque des revendications 1 à 11 dans un four à contact à étages pour l'oxydation de dioxyde de soufre en trioxyde de soufre sur un catalyseur contenant du pentoxyde de vanadium, qui est introduit dans deux, trois, quatre étages successifs ou plus, avec à chaque fois un refroidissement intermédiaire entre deux étages successifs, le matériau pour l'étanchéification de l'espace intermédiaire étant utilisé entre la limite extérieure des étages et la paroi intérieure du four à contact à étages.
